Europäisches Patentamt

European Patent Office

Office européen des brevets

(19)

(11) Veröffentlichungsnummer: **0 090 944**
**B1**

(12) **EUROPÄISCHE PATENTSCHRIFT**

(45) Veröffentlichungstag der Patentschrift:
20.05.87

(51) Int. Cl.⁴: **F 16 H 1/445,** B 60 K 17/34

(21) Anmeldenummer: **83101899.9**

(22) Anmeldetag: 26.02.83

(54) **Differentialgetriebe.**

(30) Priorität: 03.04.82 DE 3212495

(43) Veröffentlichungstag der Anmeldung:
12.10.83 Patentblatt 83/41

(45) Bekanntmachung des Hinweises auf die Patenterteilung:
20.05.87 Patentblatt 87/21

(84) Benannte Vertragsstaaten:
DE FR GB IT NL SE

(56) Entgegenhaltungen:
DE-A-2 038 137
GB-A-1 224 034
US-A-4 070 924

(73) Patentinhaber: **Dr.Ing.h.c. F. Porsche Aktiengesellschaft, Porschestrasse 42, D-7000 Stuttgart 40 (DE)**

(72) Erfinder: **Müller, Robert, Mörikestrasse 24, D-7251 Weissach (DE)**

EP 0 090 944 B1

LIBER, STOCKHOLM 1987

## Beschreibung

Die Erfindung betrifft ein Differentialgetriebe für Kraftfahrzeuge, das durch Zusammendrücken eines an ihm angeordneten Lamellenpakets sperrbar ist, gemäß Oberbegriff des Anspruchs 1. Einsolches Getriebe ist aus der GB-A 1 224 034 bekannt.

Nach DE-B 14 55 879 sind die den Achsabtriebswellen zugeordneten Kegelräder eines Differentialgetriebes mit je einem als Kupplung dienenden Lamellenpaket versehen. Diese Lamellenkupplungen sind durch Federscheiben verspannt, die zwischen das Differentialgehäuse und die Verschiebeglieder der Lamellenkupplung eingelegt sind. Beim Anfahren des Fahrzeugs erzeugt das Raddrehmoment eine Bremskraft an den Zähnen der miteinander in Eingriff stehenden Ausgleichsräder und Tellerkegelräder, die die Tellerkegelräder um eine Strecke entsprechend der zur Verfügung stehenden Drehkraft nach außen schiebt. Zugleich werden die Verschiebeglieder der Lamellenkupplungen entgegen der Kraft der Federscheiben in Richtung der Achsabtriebswellen nach außen bewegt, wodurch der Axialdruck auf die Lamellenkupplung soweit reduziert wird, daß eine normale Ausgleichswirkung des Differentialgetriebes erzielt wird. Nur wenn ein Rad still steht oder seine Bodenhaftung verliert, wird die zugehörige Lamellenkupplung durch die Federscheiben soweit zusammengedrückt, daß das Differentialgetriebe gesperrt ist.

Bei diesem Differentialgetriebe mit sich selbsttätig einstellender Ausgleichssperre ist die Sperrwirkung allein von dem aufgebrachten Raddrehmoment abhängig, die Sperrwirkung kann sich darüber hinaus durch Fertigungsungenauigkeiten, Verschleiß und Erlahmen der Federscheiben in unerwünschte Weise verändern.

Es ist die Aufgabe der Erfindung, ausgehend vom oben genannten Stand der Technik ein sperrbares Differentialgetriebe zu schaffen, dessen Sperrwirkung in vorgebbarer Weise steuerbar ist, sich nicht unkontrolliert ändern kann und an unterschiedliche Betriebsbedingungen verschiedener Fahrzeuge anpassbar ist.

Zur Lösung dieser Aufgabe dienen die im Kennzeichen des Anspruchs 1 aufgeführten Merkmale. Da das Differentialgetriebe mit einem Lamellenpaket versehen ist, das durch eine Einrückvorrichtung reibschlüssig verbindbar ist, wie sie in ähnlicher Ausführung zum Kuppeln von Kraftfahrzeuggetrieben allgemein üblich ist, ist die Möglichkeit geschaffen, die Sperrwirkung des Differentials durch Variation der Kupplungskraft zu bemessen und unabhängig von zwischenzeitlich eingetretenem Verschleiß, exakt einstellbar zu machen. Das Lamellenpaket wirdhierbei über verschiedene Zwischenglieder durch die feder der Einrückkupplung vorgespannt, die bei Betätigen der Einrückkupplung soweit verspannt wird, bis die Lamellen reibschlüssig aneinander liegen und das Differential gesperrt ist.

Neben dem geringen Platzbedarf erbringt die Tellfeder den Vorteil, daß sie eine Kraftübersetzung zwischem dem Betätigungslied der Lamellenkupplung und dem hydraulisch betätigten Einrücklager und somit eine feinfühlige Einstellung der Sperrwirkung des Differentialgetriebes ermöglicht.

Die bei einem Kegelrad-Differentialgetriebe verwendeten Bestandteile der Einrückkupplung sind in Anspruch 2 aufgeführt; ihre konstruktive Gestaltung und ihr Zusammenwirken sind kennzeichnende Merkmale der Ansprüche 5 und 6.

In den Ansprüchen 3 und 4 sind die Kraftfahrzeug-Kenngrößen angegeben, die für eine vollautomatische Ansteuerung der Einrückkupplung und eine Sperrung des Differentials verwendet werden können.

Weitere Vorteile eines derartigen Differentialgetriebes kommen dann zur Geltung, wenn es nach Anspruch 7 im Verteilergetriebe eines Allradantriebs eingesetzt ist. Für diesen fäll wird ein Planetenrad-Differentialgetriebe gewählt, das eine ungleiche Aufteilung der Antriebsdrehmomente auf Vorderachse und Hinterachse ermöglicht.

Die Zeichnungen zeigen Ausführungsbeispiele der Erfindung, die nachfolgend erläutert werden.

In einem Außengehäuse 1, das durch einen seitlich angeschraubten Deckel 2 verschlossen ist, ist ein Ausgleichsgehäuse 3 drehbar gelagert. Außen auf dem Ausgleichsgehäuse 3 ist ein Tellerrad 4 angeflanscht, das durch ein nicht gezeichnetes Kegelrad angetrieben wird und dabei die drehfest beidseitig im Ausgleichsgehäuse 3 befestigten Achsabtriebswellen 5, 6 mitnimmt, deren Durchführung durch das Außengehäuse 1 durch Lippendichtungen 7, 8 abgedichtet ist. Auf Keilprofilen der Achsabtriebswellen 5, 6 sind Kegelräder 9, 10 befestigt; sie stehen mit Kegelrädern 11, 12 in Eingriff, die senkrecht zu den Achsabtriebswellen 5, 6 im Ausgleichsgehäuse 3 gelagert sind. Das Kegelrad 9 der linken Achsabtriebswelle 5 ist mit axial verlaufenden Nuten versehen; in sie sind die Innenlamellen 13 eines Lamellenpakets 14 eingeschoben, dessen Außenlamellen 15 in axialen Nuten des Ausgleichsgehäuse 3 drehfest arretiert sind. An der innersten Innenlamelle 13' liegt eine Druckplatte 16 an, über die die Einrückkupplung 17 auf das Lamellenpaket 14 einwirkt. Die Einrückkupplung 17 besteht aus dem Einrücklager 18 mit Außenring 18' und Innenring 18'', Tellerfeder 19, einem Druckstück 20 und den an ihm angebrachten Stiften 21, die in Bohrungen des Ausgleichsgehäuses 3 längsgeführt sind und an der Druckplatte 16 federnd anliegen. Am Außenring 18' des Einrücklagers 18 liegt ein genuteter Hydraulikring 22 an, er ist über eine Bohrung 23 im Deckel 2 des Außengehäuses 1 mit Druckflüssigkeit beaufschlagbar, die über eine nichtgezeichnete Schlauchverbindung zugeführt wird.

Wenn Druck auf den Hydraulikring 22 gegeben wird, verschiebt er sich nach links und verspannt über das ebenfalls nach links gleitende Einrücklager 18 die Tellerfeder 19, die an ihrem äußeren Rand an einer Auflagestelle 24 einer Stellmutter 25 schwenkbar anliegt. An der geringfügig radial nach innern versetzten Anlagestelle 26 wird das Druckstück samt den Stiften nach Links geschoben. Über die Druckplatte werden die Innenlamellen auf die Außenlamellen gedrückt und stellen so eine reibschlüssige Verbindung vom Ausgleichsgehäuse 3 zu dem Kegelrad 9 her, wodurch das Differential gesperrt wird. Die Sperrwirkung ist durch Verstellen der Stellmutter 25 voreinstellbar und außerdem durch die Höhe des Hydraulikdrucks einstellbar. Der Hydraulikdruck ist direkt oder über eine Servobetätigung von den Kenngrößen des Kraftfahrzeugs, wie Fahrgeschwindigkeit, Lenkwinkel oder Motordrehmoment steuerbar, so daß eine vollautomatische Anpassung der Sperrwirkung an unterschiedliche Betriebszustände des Fahrzeugs erzielbar ist.

Konstruktiv von Vorteil ist der kurze Kraftschluß auf engstem Raum von dem Druckstück 20, über die Stifte 21 und die Druckplatte 16 zu dem Außenbereich des Lamellenpakets 14 und über die Wände des Ausgleichsgehäuses 3 zurück zur Tellerfeder 19. Der geringe Abstand von der Auflagestelle 24 zur Anlagestelle 26 des Druckstücks in Verbindung mit dem verhältnismäßig großen Abstand zur Angriffstelle 27 des Innenrings des Ausrücklagers an der Tellerfeder 19 ergibt eine günstige Kraftübersetzung für den Kupplungsvorgang, die eine feinfühlige Einstellung der Sperrwirkung des Differentials ermöglicht.

Anstelle der direkten Beaufschlagung des Hydraulikrings kann auch eine Betätigung mittels eines am Außengehäuse angebrachten Hydraulikkolbens treten, der über ein Hebelgestänge am Einrücklager eingreift. für manche Anwendungsfälle ist auch eine rein mechanische Betätigung der Einrückkupplung über einen Seilzug von Vorteil.

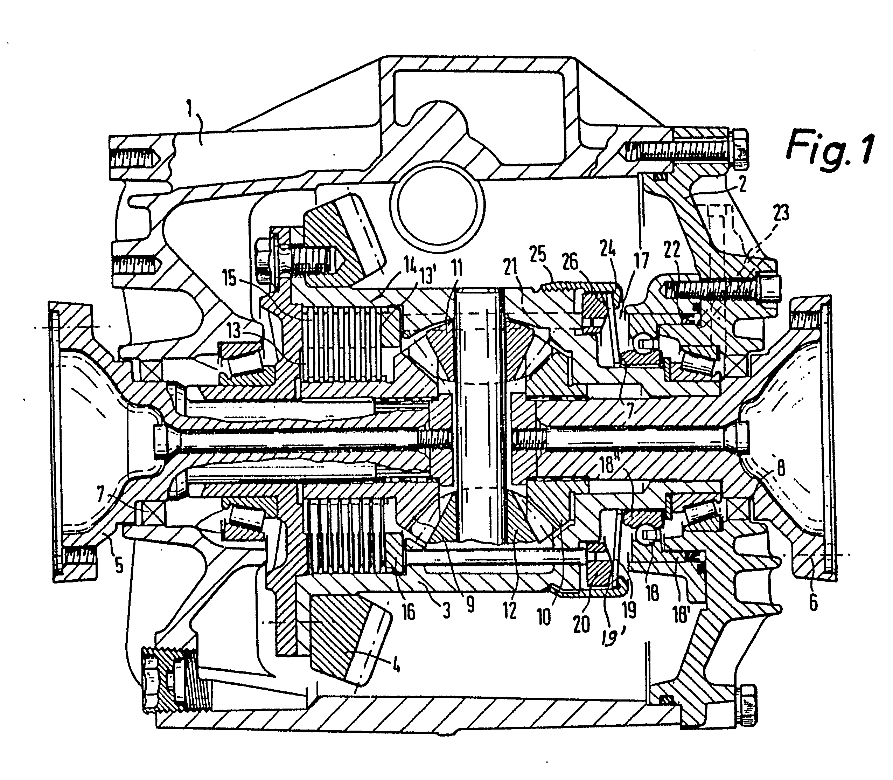

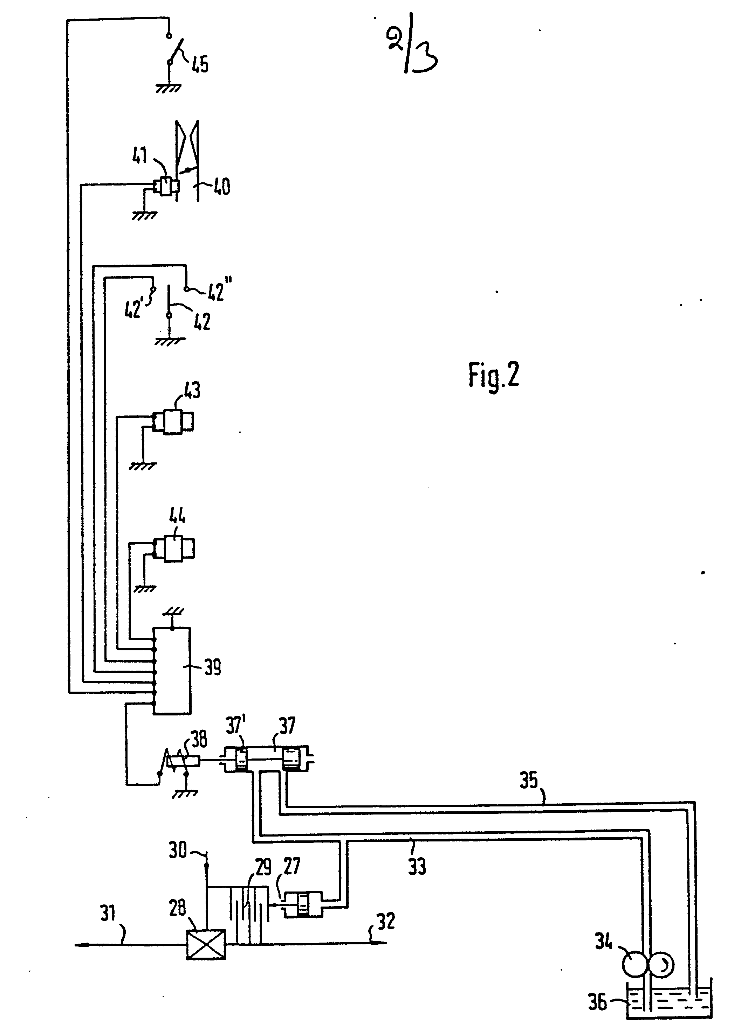

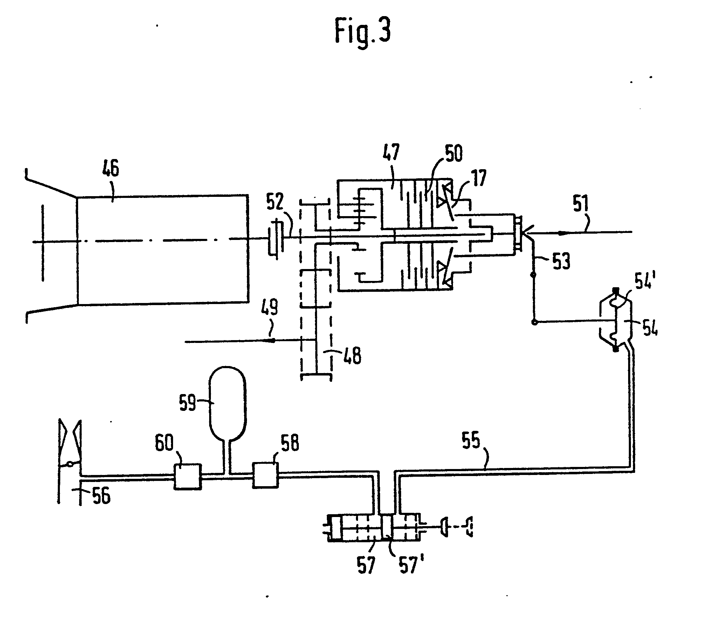

Ansteuerungen der Einrückkupplung 17 für ein Differentialgetriebe, das im Verteilergetriebe eines Allradantriebs angeordnet ist, sind in fig. 2 und Fig. 3 dargestellt.

Nach Fig. 2 ist die Einrückkupplung 17 durch einen Hydraulikkolben mit Wirkpfeil 27 dargestellt, der auf eine am Differentialgetriebe 28 angebrachte Lamellenkupplung 29 einwirkt. Zu dem Differentialgetriebe 28 führt eine Antriebswelle 30; es hat eine Abtriebswelle 31 zur Vorderachse sowie eine Abtriebswelle 32 zur Hinterachse. Der Hydraulikkolben ist an eine Hydraulikleitung 33 angeschlossen, die von einer Pumpe 34 versorgt wird. Zur Druckregelung ist zwischen der Hydraulikleitung 33 und einer Rücklaufleitung 35 zu einem Vorratsbehälter 36 ein Druckregelventil 37 eingebaut. Sein Regelkolben 37' ist durch einen elektromagnetischen Stellantrieb 38 verschiebbar, der an ein elektronisches Steuergerät 39 angeschlossen ist.

Auf das Steuergerät 39 wirken mehrere Kenngrößen des Kraftfahrzeugs ein, die jeweils durch Meßwertgeber und Schalter erfaßt sind und in vorteilhafter Weise zur Steuerung der Einrückkupplung 17 verwendet sind. Hierzu gehören ein am Saugrohr 40 der Brennkraftmaschine angebrachter Unterdruckgeber 41 und ein Schalter 42, dessen einer Kontakt 42' den ersten Gang, dessen anderer Kontakt 42'' den zweiten Gang eines Gangschaltgetriebes angibt und der ein entsprechendes Signal an das Steuergerät 39 gibt. Bei Automatikgetrieben werden durch die beiden Schaltstellungen 42' und 42'' zwei Stellungen des Wählhebels bezeichnet. Die kombinierte Ansteuerung durch den Saugrohrunterdruck und die Gangschaltstufen ist geeignet zur Lastsimulation. Aus den bekannten Traktionsdiagrammen ist zu ersehen, daß die Lastabhängigkeit der Steuerung nur im ersten und zweiten Gang sinnvoll ist; es wird dadurch ein Überhitzen der Lamellenkupplung 29 infolge dauernden Schlupfes bei höheren Geschwindigkeiten vermieden, der zum Beispiel durch ungleich abgenützte Reifen entstehen kann. Die innere Reibung des Verteilergetriebes führt an sich schon zu einer etwas größeren Bandbreite des Traktions-Gütegrades, so daß die Lamellenkupplung erst oberhalb von Reibwerten größer als ca. 0,4 eingesetzt werden soll. Somit kann der kritische Glatteisbereich ohne das fahrverhalten negativ beeinflussende Verspannungen gefahren werden.

Weiterhin ist an das Steuergerät 39 ein Druckgeber 43 geschaltet, der den Druck der Bremsflüssigkeit signalisiert. Beim Allradantrieb ist eine Kupplung aller Räder wünschenswert; sie ergibt gegenüber einfachen Bremskraftbegrenzern ein verbessertes Bremsverhalten. Die Antriebsauslegung des Verteiler-Differentialgetriebes 28 führt allerdings zu einer Fehlanpassung beim Bremsen. Dem ist mit bremskraftabhängigem Schließen der Lamellenkupplung 29 zu begegnen. So können bei unterschiedlicher Traktion vorn/hinten zum Beispiel bei Anbringen von Schneeketten an den Hinterrädern, die Vorderradbremsen einen Teil der Hinterradbremsleistung übernehmen. Durch die erfindungsgemäße Ansteuerung werden die Vorderräder am Überbremsen gehindert und bleiben somit lenkfähig.

Um die Verspannung durch hohe Lenkkräfte zu vermeiden, die bei engen Kurven-Radien und hohen Reibwerten entstehen, gibt ein Lenk-Servogeber 44 bei hohen Lenkkräften Signal an das Steuergerät 39 zum Lösen der Lamellenkupplung.

Zusätzlich kann die Lamellenkupplung über Drehzahlsensoren am Vorderachs- und Hinterachsantrieb so gesteuert werden, daß sie schließt, sobald die Drehzahldifferenz am Verteilergetriebe größer ist als 77 l/min; dieser Wert entspricht einer Grenzgeschwindigkeit der engsten Kurve bei Reibwert μ = 1.

Um das Kraftfahrzeug bei außergewöhnlichem Fahrverhalten, zum Beispiel mit hinteren Schneeketten oder bei extrem ungleichen Reibwerten an Vorderrädern und Hinterrädern durch eine Handsteuerung besser im Griff zu haben, ist ein handbetätigter Schalter 45 an das Steuergerät 39 angeschlossen, bei dessen Betätigen die elektronische Steuerung des Verteilerdifferentials außer Betrieb gesetzt wird.

Eine Servobetätigung des Verteilerdifferentials, die mit einem Handschaltventil zu bedienen ist, zeigt fig. 3.

Ein von einem Gangschaltgetriebe 46 angetriebenes Verteilergetriebe 47 enthält einen Kettenantrieb 48, über den der Abtrieb 49 zur Vorderachse erfolgt, ein Planetenrad-Differentialgetriebe mit einer Lamellenkupplung 5-, sowie eine Einrückkupplung 17. Die Abtriebswelle 51 zur Hinterachse liegt koaxial zu der vom Gangschaltgetriebe 46 ausgehenden Antriebswelle 52 und ist von ihr ständig angetrieben. Der Abtrieb 49 zur Vorderachse ist erst bei Betätigen der Einrückkupplung 17 zugeschaltet. Hierzu ist die Einrückkupplung 17 über ein Hebelgestänge 53 mit einer Membranservoeinrichtung 54 verbunden, deren Membran 54' von dem Saugrohrunterdruck beaufschlagt ist. Zur Steuerung des Unterdrucks ist in die Verbindungsleitung 55 von der Membranservoeinrichtung zum Ansaugrohr 56 ein Handschaltventil 57 eingebaut, dessen Steuerkolben 57'' von Hand längsverschieblich ist und dabei wahlweise den vollen Saugrohrunterdruck auf die Membran 54' gibt oder einen über eine Öffnung zur Atmosphäre reduzierten Unterdruck. Zwischen dem Handschaltventil 57 und dem Ansaugrohr 56 sind als weitere Bauteile ein Druckbegrenzungsventil 58, ein Reservebehälter 59 und ein Rückschlagventil 6- vorgesehen, die für einen störungsfreien Betrieb der pneumatischen Steuerungsanlage erforderlich sind.

## Patentansprüche

1. Differentialgetriebe für Kraftfahrzeuge, das durch Zusammendrücken eines an ihm angeordneten Lamellenpakets (14; 50) sperrbar ist, wobei die Kraft auf das Lamellenpaket (14; 50) von einer Einrückvorrichtung (Einrückkupplung (17)) aufgebracht wird, die aus einem verschieblichen Einrücklager (18), und Druckelementen besteht, dadurch gekennzeichnet, daß der Innenring (18'') des Einrücklagers (18) am Innenrand einer als Tellerfeder (19) ausgebildetem Einrückfeder anliegt, deren Außenrand (19') an einer zum Ausgleichsgehäuse (3; 47) festen Auflagestelle (24) schwenkbar aufliegt, zu der mit geringem radialen Abstand nach innen die Anlagestelle (26) des Druckstücks (20) an der Tellerfeder (19) angeordnet ist.

2. Differentialgetriebe nach Anspruch 1, mit in einem Ausgleichsgehäuse (3) im Eingriff stehenden Kegelrädern, von denen zwei auf den beiden Achsabtriebswellen befestigt sind, dadurch gekennzeichnet, daß zwischen dem Kegelrad (9) der einen Achsabtriebswelle (5) und dem Ausgleichsgehäuse (3) das Lamellenpaket (14) angeordnet ist, auf das die im Bereich des gegenüberliegenden Kegelrades (10) befindliche Einrückkupplung (17) einwirkt, die aus einem Hydraulikring (22), einem Einrücklager (18), einer Tellerfeder (19), einem Druckstück (20) sowie mehreren im Ausgleichsgehäuse (3) längsgeführten Stiften (21) gebildet ist.

3. Differentialgetriebe nach Anspruch 1 oder 2, dadurch gekennzeichnet, daß die Einrückkupplung (17) durch einzelne Kenngrößen des Kraftfahrzeugs oder durch eine Kombination der Kenngrößen, die funktional miteinander verknüpft sind, angesteuert wird.

4. Differentialgetriebe nach Anspruch 3, dadurch gekennzeichnet, daß als steuernde Kenngrößen das Motordrehmoment, der Saugrohrunterdruck, die Gaspedalstellung, die Lenkkraft, der Lenkwinkel, die Bremskraft, die Achslastverteilung, der Radschlupf, die fahrgeschwindigkeit und/oder die Schalthebelstellung des Getriebes verwendet sind, wobei die Kenngrößen als Drucksignale oder elektrische Stellsignale eine Servobetätigung der Einrückkupplung (17) ansteuern.

5. Differentialgetriebe nach Anspruch 1, dadurch gekennzeichnet, daß die Auflagestelle (24) an einer Stellmutter (25) angebracht ist, die in Richtung der Achsabtriebswellen (5, 6) außen auf das Ausgleichsgehäuse (3) geschraubt ist.

6. Differentialgetriebe nach Anspruch 1 und 2, dadurch gekennzeichnet, daß an dem Druckstück (2-) mehrere Stifte (21) angebracht sind, die im Ausgleichsgehäuse (3) in Richtung der Achsabtriebswellen (5, 6) längsgeführt sind und über die Druckplatte (16) auf den radialen Außenbereich des Lamellenpakets (14) ringsum einwirken.

7. Differentialgetriebe nach Anspruch 1, 3 und 4, dadurch gekennzeichnet, daß es im Verteilergetriebe eines Allradantriebs eingesetzt ist.

8. Differentialgetriebe nach Anspruch 7, dadurch gekennzeichnet, daß ein Planetenrad-Differentialgetriebe verwendet wird, das die Antriebsdrehmomente Hinterachse zur Vorderachse ungleich, vorzugsweise im Verhältnis 1,25 zu 1 aufteilt.

9. Differentialgetriebe nach einem der Ansprüche 1 bis 4, dadurch gekennzeichnet, daß die Einrückkupplung (17) manuell über einen Bowdenzug und/oder über eine hydrostatische Übertragung betätigbar ist.

10. Differentialgetriebe nach einem der Ansprüche 1 bis 4 oder 9, dadurch gekennzeichnet, daß die Einrückkupplung (17) durch Kenngrößen des Kraftfahrzeugs über ein zentrales Steuergerät (39) steuerbar ist, wobei die Kenngrößen-Ansteuerung durch einen handbetätigten Schalter (45) sperrbar ist (Fig. 2).

11. Differentialgetriebe nach einem der Ansprüche 3, 4 oder 7 bis 10, dadurch gekennzeichnet, daß die Einrückkupplung (17) durch den Saugrohrunterdruck über ein Handschaltventil (57) und eine Membran-Servoeinrichtung (54) steuerbar ist (Fig. 3).

12. Differentialgetriebe nach einem der Ansprüche 1 bis 4 oder 7 bis 10, dadurch gekennzeichnet, daß die Einrückkupplung (17) lastabhängig gesteuert ist, und daß über einen an das Steuergerät (39) angeschlossenen Schalter (42) am Gangschaltgetriebe oder am Wählhebel des Automatikgetriebes die jeweilige Schaltstufe in die Steuerung einbezogen ist.

13. Differentialgetriebe nach einem der Ansprüche 1 bis 4 oder 7 bis 10, dadurch gekennzeichnet, daß die Einrückkupplung (17) durch einen Lenkkraftgeber (44) derart betätigbar ist, daß sie bei hohen Lenkkräften lösbar ist.

14. Differentialgetriebe nach einem der Ansprüche 1 bis 4 oder 7 bis 10, dadurch gekennzeichnet, daß die Einrückkupplung (17) durch den Druck der Bremsflüssigkeit über einen Bremsdruckgeber (43) steuerbar ist.

15. Differentialgetriebe nach den Ansprüchen 3 und 4 sowie 7 bis 10, dadurch gekennzeichnet, daß die Einrückkupplung (17) durch Drehzahlsensoren am Vorderachs- und Hinterachsantrieb des Kraftfahrzeugs derart steuerbar ist, daß sie ab einer Drehzahldifferenz am Verteilergetriebe von ca. 77 1/min geschlossen ist.

## Revendications

1. Différentiel pour des véhicules à moteur, qui peut être bloqué par la compression d'un paquet de disques (14; 50) disposés sur lui, avec lequel la force est appliquée sur le paquet de disques (14; 50) par un dispositif d'embrayage (embrayage 17), qui est constitué par un palier d'embrayage (18) déplaçable et des éléments de pression, caractérisé en ce que la bague intérieure (18'') du palier d'embrayage (18) appuie sur le bord intérieur d'un ressort d'embrayage réalisé sous forme de ressort Belleville (19), dont le bord extérieur (19') appuie à pivotement sur un point d'appui (24) fixe par rapport à la cage de différentiel (3; 47), le point d'appui (26) Se la pièce de pression (20) sur le ressort Belleville (19) se trouvant à une faible distance radiale vers l'intérieur du point d'appui (24).

2. Différentiel selon la revendication 1, comportant, des pignons coniques en prise dans une cage de différentiel (3), dont deux sont fixés sur les deux arbres de sortie de roues, caractérisé en ce qu'on place entre le pignon conique (9) de l'un des arbres de sortie de roue (5) et la cage de différentiel (3) le paquet de disques (14) sur lequel agit l'embrayage (17) situé dans la zone du pignon conique opposé (10), lequel embrayage est constitué par une bague hydraulique (22), un palier d'embrayage (18), un ressort Belleville (19), une pièce de pression (20) ainsi que par plusieurs tiges (21) guidées longitudinalement dans la cage de différentiel (3).

3. Différentiel selon la revendication 1 ou 2, caractérisé en ce que l'embrayage (17) est commandé en fonction de paramètres individuels du véhicule ou en fonction d'une combinaison des paramètres qui sont combinés fonctionnellement ensemble.

4. Différentiel selon la revendication 3, caractérisé en ce qu'on utilise comme paramètres de commande le couple moteur, la dépression à la tubulure d'admission, la position de la pédale d'accélération, la force de déviation, l'angle de déviation, la force de freinage, la répartition des charges sur les essieux, le patinage des roues, la vitesse de marche et/ou la position du levier de commande de la boîte de vitesses, les paramètres commandant en tant que signaux de pression ou signaux de réglage électriques un actionnement assisté de l'embrayage (17).

5. Différentiel selon la revendication 1, caractérisé en ce que le point d'appui (24) est prévu sur un écrou de réglage (25) qui est vissé dans le sens des arbres de sortie de roues (5, 6) à l'extérieur sur la cage de différentiel (3).

6. Différentiel selon l'ensemble des revendications 1 et 2, caractérisé en ce qu'on fixe sur la pièce de pression (20) plusieurs tiges (21) qui sont guidées longitudinalement dans la cage de différentiel (3) dans le sens des arbres de sortie de roues (5, 6) et qui, par l'intermédiaire de la plaque de pression (16) agissent tout autour sur la zone extérieure radiale du paquet de disques (14).

7. Différentiel selon l'ensemble des revendications 1, 3 et 4, caractérisé en ce qu'il est utilisé dans la boîte transfert d'une transmission intégrale.

8. Différentiel selon la revendication 7, caractérisé en ce qu'on utilise un différentiel à roues planétaires qui répartit les couples d'entraînement essieu arrière-essieu avant de façon inégale de préférence dans le rapport 1,25 à 1.

9. Différentiel selon l'une quelconque des revendications 1 à 4, caractérisé en ce que l'embrayage (17) peut être actionné à la main par l'intermédiaire d'un câble Bowden et/ou d'une transmission hydrostatique.

10. Différentiel selon l'une quelconque des revendications 1 à 4, caractérisé en ce que l'embrayage (17) peut être commandé à l'aide des paramètres du véhicule par l'intermédiaire d'un appareil de commande central (39), la commande par paramètres pouvant être arrêtée à l'aide d'un interrupteur actionné à la main (45) (Figure 2).

11. Différentiel selon l'une quelconque des revendications 3, 4 ou 7 à 10, caractérisé en ce que l'embrayage (17) peut être commandé à l'aide de la dépression à la tubulure d'admission par l'intermédiaire d'un répartiteur à commande manuelle (57) et d'un dispositif assisté à membrane (54) (Figure 3).

12. Différentiel selon l'une quelconque des revendications 1 à 4 ou 7 à 10, caractérisé en ce que l'embrayage (17) est commandé en fonction de la charge, et en ce que par l'intermediaire d'un interrupteur relié à l'appareil de commande (39) et placé sur le changement de vitesse ou sur le levier de sélection de la boîte automatique, le rapport de transmission choisi est intégré dans la commande.

13. Différentiel selon l'une quelconque des revendications 1 à 4 ou 7 à 10, caractérisé en ce que l'embrayage (17) peut être actionné par un capteur de force dedéviation (44) de telle sorte qu'il puisse être débrayé en cas de forces de déviation élevées.

14. Différentiel selon l'une quelconque des revendications 1 à 4 ou 7 à 10, caractérisé en ce que l'embrayage (17) peut être commandé par la pression du liquide de frein, par l'intermédiaire d'un capteur de pression de freinage (43).

15. Différentiel selon les revendications 3 et 4 ainsi que 7 à 10, caractérisé en ce que l'embrayage (17) peut être commandé par des détecteurs de vitesse sur la traction avant et sur la traction arrière du véhicule de telle sorte qu'il est fermé à partir d'une différence de vitesse à la boîte de transfert d'environ 77 1/min.

## Claims

1. A differential gear for motor vehicles which is lockable by compression of a lamellar packet (14, 50) disposed thereon, the power being exerted on the lamellar packet (14, 50) by an engaging device (engaging clutch (17)), which consists of a displaceable engaging bearing (18) and pressure elements, characterised in that the inner ring (18") of the engaging bearing (18) rests against the inner edge of an engaging spring designed as a plate spring (19), the outer edge (19') of which rests pivotably on a supporting point (24) which is fixed with respect to the differential gear casing (3 47) the resting point (26) of the pressure member (20) on the plate spring (19) being arranged inwardly of the supporting point (24) with minimal radial clearance.

2. A differential gear according to claim 1 with bevel gears meshed with a differential gear casing (3), two of the bevel gears being mounted on the two axle output shafts (5), characterised in that the lamellar packet (14) is disposed between the bevel gear (9) of one axle output shaft (5) and the differential gear casing (3), the engaging clutch (17) situated in the region of the opposite bevel gear (10) acting upon the lamellar packet (14) and being formed from a hydraulic ring (22), an engaging bearing (18), a plate spring (19), a pressure member (20) and a plurality of pins (21) which are guided longitudinally in the differential gear casing (3).

3. A differential gear according to claim 1 or 2, characterised in that the engaging clutch (17) is controlled by separate parameters of the motor vehicle or by a combination of parameters which are functionally related to one another.

4. A differential gear according to claim 3, characterised in that the motor torque, the induction pipe low pressure, the accelerator position, the steering power, the steering angle, the brake power, the axle load distribution, the wheel slippage, the speed of travel and/or the gear lever position are used as the controlling parameters, whereby the parameters, as pressure signals or electrical adjusting signals, control a servo control mechanism for the engaging clutch (17).

5. A differential gear according to claim 1, characterised in that the supporting point (24) is mounted on an adjusting nut (25) which is screwed externally to the differential gear casing (3) in the direction of the axle output shafts (5, 6).

6. A differential gear according to claim 1 and 2, characterised in that a plurality of pins (21) are mounted on the pressure member (20), are guided longitudinally in the differential gear casing (3) in the direction of the axle output shafts (5, 6) and act all around on the radially exterior region of the lamellar packet (14) via the pressure plate (16).

7. A differential gear according to claim 1, 3 and 4, characterised in that a fourwheel drive is mounted in the gear box.

8. A differential gear according to claim 7, characterised in that a planet wheel-differential gear is used which distributes the driving torque unequally over the rear axle and the front axle, preferably in a ratio of 1.25 to 1.

9. A differential gear according one of claims 1 to 4, characterised in that the engaging clutch (17) is actuated manually via a Bowden cable and/or a hydrostatic transmission.

10. A differential gear according to one of claims 1 to 4 or 9, characterised in that the engaging clutch (17) is controllable by parameters of the motor vehicle via a central control apparatus (39), the mechanism for controlling parameters being lockable by means of a hand-operated switch (45) (fig 2).

11. A differential gear according to one of claims 3, q or 7 to 10, characterised in that the engaging clutch (17) is controllable by means of the suction pipe low pressure via a manual switch valve (57) and a diaphragm servo device (54) (fig 3)

12. A differential gear according to one of claims 1 to 4 or 7 to 10, characterised in that the engaging clutch (17) is load-controlled, and that the respective gear level is incorporated in the control via a switch (42) on the gear changing drive or selection lever of the automatic gearbox connected to the control apparatus (39).

13. A differential gear according to one of claims 1 to 4 or 7 to 10, characterised in that the engaging clutch (17) is actuated by a steering power transmitter (44) of the kind which can be released at high steering powers.

14. A differential gear according to one of claims 1 to 4 or 7 to 10, characterised in that the engaging coupler (17) is controllable by the pressure of the brake fluid via a brake pressure transmitter (43).

15. A differential gear according to claims 3 and 4 and 7 to 10, characterised in that the engaging clutch (17) is controllable by rotational speed sensors on the fron and rear axle drive of the vehicle such that the clutch is engaged above a rotational speed differential on the distributor gear of about 77 1/min.

Fig.1

0 090 944

Fig. 2

0 090 944

2/3

# Fig.3